# EUROPÄISCHE PATENTSCHRIFT

(11) **EP 1 008 772 B1**
(45) Veröffentlichungstag und Bekanntmachung des Hinweises auf die Patenterteilung: **26.05.2004**
(21) Anmeldenummer: 99890369.4
(22) Anmeldetag: 22.11.1999
(51) Int. Cl.: F16C 3/28, B30B 1/26

(54) **Schmiedemaschine**
Forging machine
Machine à forger

(30) Priorität: 09.12.1998 AT 206098
(43) Veröffentlichungstag der Anmeldung: 14.06.2000
(73) Patentinhaber: GFM Beteiligungs- und Management GmbH & Co KG, 4403 Steyr (AT)
(72) Erfinder: Seeber, Alfred, Ing., 4400 Garsten/Steyr (AT); Blaimschein, Gottfried, Ing., 4407 Steyr (AT)
(74) Vertreter: Hübscher, Gerhard, Dipl.-Ing.

(56) Entgegenhaltungen:
- DE-A- 2 411 340
- GB-A- 2 083 156
- PATENT ABSTRACTS OF JAPAN vol. 017, no. 705 (M-1534), 22. Dezember 1993 (1993-12-22) -& JP 05 245696 A (KURIMOTO LTD), 24. September 1993 (1993-09-24)
- PATENT ABSTRACTS OF JAPAN vol. 1998, no. 12, 31. Oktober 1998 (1998-10-31) -& JP 10 180496 A (JAPAN AUTOMAT MACH CO LTD), 7. Juli 1998 (1998-07-07)

## Beschreibung

Die Erfindung bezieht sich auf eine Schmiedemaschine mit exzentergetriebenen Schmiedepleueln, die radial zur Exzenterwellenachse in einem Schmiedekasten hubbewegbar geführt sind und zur Antriebsverbindung am exzenterzugewandten Ende einen Pleuelkopf mit einer Gleitfläche zum drehfest gleitenden Zusammenwirken mit einem drehbar am Exzenter sitzenden Lagerkörper aufweisen.

Schmiedemaschinen mit exzentergetriebenen Schmiedepleueln haben sich in den verschiedensten Ausführungen bereits bestens bewährt, wobei allerdings zur Hublagenverstellung der Schmiedepleuel spezielle Verstellgehäuse für die Exzenterweilenlagerung vorzusehen sind, wodurch das Maschinengestell wegen der erforderlichen Lageraugen in seiner Steifigkeit geschwächt wird und auf Grund der Verlagerung der Exzenterwellenmitte beim Verstellen ein entsprechender, diesen Versatz ausgleichender Exzenterwellenantrieb erforderlich ist. Es wurde auch schon vorgeschlagen, die Schmiedepleuel zur Hublagenverstellung aus zwei schraubverstellbar miteinander verbundenen Teilen zusammenzusetzen, von denen der eine gegenüber dem Schmiedekasten drehfest und der andere verdrehbar geführt werden und der verdrehbare Teil mit einem Drehantrieb in Verbindung steht, so daß durch eine Verdrehung des verdrehbaren Teils wegen der gegenseitigen Verschraubung der Teile eine Längenänderung des Schmiedepleuels und damit eine Hublagenverstellung zustande kommt. Auch diese Hublagenverstelleinrichtung bleibt allerdings noch recht aufwendig und beeinträchtigt wegen der Teilung der Pleuel deren Belastbarkeit.

Der Erfindung liegt daher die Aufgabe zugrunde, eine Schmiedemaschine der eingangs geschilderten Art zu schaffen, die sich durch ihre besonders einfache und robuste Hublagenverstelleinrichtung auszeichnet.

Die Erfindung löst diese Aufgabe dadurch, daß die Gleitfläche des Pleuelkopfes eine zu der durch die Exzenterwellenachse und die Pleuelachse bestimmten Axialebene normale und zur Exzenterwellenachse schräggerichtete Gleitbahn bildet und der eine entsprechende Schrägfläche bildende Lagerkörper über einen Verstellantrieb relativ zum in Exzenterwellenachsrichtung bewegungsfest abgestützten Pleuel schiebeverstellbar angeordnet ist. Lagerkörper und Pleuel wirken daher wie ein Keilgetriebe zusammen, so daß eine Axialverschiebung des Lagerkörpers auf Grund der dadurch entstehenden Relativbewegung zwischen dessen Schrägflächen und der Gleitbahn des Pleuelkopfes zu einer Verschiebung des Schmiedepleuels in Pleuelachsrichtung führt und sich zwangsweise die gewünschte Hublagenverstellung ergibt. Der Lagerkörper dient dabei gleichzeitig zur Antriebs- und Bewegungsverbindung zwischen Exzenterwelle und Schmiedepleuel, was eine kompakte, hochbelastbare und dennoch aufwandsarme Konstruktion erlaubt.

Zur Schiebeverstellung der Lagerkörper könnten geeignete Verstellantriebe direkt an den Lagerkörpern angreifen und diese gegenüber dem Pleuel und dem Exzenter verschieben. Zweckmäßig ist es aber, wenn der Lagerkörper verschiebefest am Exzenter sitzt und der Verstellantrieb an der axial verschiebbar gelagerten Exzenterwelle angreift, wodurch sich für den Verstellantrieb günstigere Einbauverhältnisse ergeben.

Die erfindungsgemäße keilgetriebeähnliche Hublagenverstellung läßt sich bei allen exzentergetriebenen Schmiedepleueln anwenden, unabhängig davon, ob der Pleuelkopf einen Exzenter bzw. den Lagerkörper umschließt, es gemäß der AT 370.351 B eine einseitige Koppelung zwischen Pleuelkopf und einer Führungsschiene des Lagerkörpers gibt oder gemäß der EP 0 667 197 A nur eine kraftschlüssige Verbindung zwischen Pleuelkopf und Lagerkörper vorhanden ist. Wirken zur Antriebsverbindung Pleuelkopf und ein am Exzenter sitzender Gleitstein in Art einer Kreuzschleife zusammen, läßt sich vorteilhafterweise der Lagerkörper in Art eines Gleitsteines mit Querbewegungsspiel in der eine Kulissenführung bildenden Aufnahme des Pleuelkopfes einsetzen, wodurch der Lagerkörper gleichzeitig als Gleitstein der Kreuzschleife dient und auf rationelle Weise eine Doppelfunktion übernimmt.

Die erfindungsgemäße Hublagenverstelleinrichtung eignet sich nicht nur für Schmiedemaschinen mit stehendem Schmiedekasten, sondern auch für Schmiedemaschinen, die als Rundknetmaschinen Verwendung finden, wobei der Schmiedekasten um eine zu den Exzenterwellenachsen parallele Schmiedeachse dreh- und antreibbar in einem Maschinengestell lagert. Besondern vorteilhaft ist es dann, wenn für alle Exzenterwellen ein gemeinsamer Verstellantrieb vorgesehen ist, der einen Schraubentrieb aus einer am Schmiedekasten koaxial zur Schmiedeachse drehfest, aber verschiebbar gelagerten Stellmutter und einem mit der Stellmutter kämmenden antreibbaren Zahnkranz umfaßt, wobei die Stellmutter an den Exzenterwellen verdrehbar, aber verschiebefest angreifende Mitnehmer aufweist. Durch ein entsprechendes Drehen des Zahnkranzes wird so die Stellmutter axial verschoben und über diese Verschiebung können die Mitnehmer gleichzeitig auch die Exzenterwellen verschieben, was für alle Pleuel eine synchrone Hublagenverstellung bedeutet.

In der Zeichnung ist der Erfindungsgegenstand rein schematisch veranschaulicht, und zwar zeigen
- Fig. 1 und 2: eine erfindungsgemäße Schmiedemaschine im Axialschnitt nach der Linie I-I der Fig. 2 bzw. im Querschnitt nach der Linie II-II der Fig. 1 kleineren Maßstabes,
- Fig. 3 und 4: ein anderes Ausführungsbeispiel einer erfindungsgemäßen Schmiedemaschine im Axialschnitt nach der Linie III-III der Fig. 4 bzw. im Querschnitt nach der Linie IV-IV der Fig. 3 kleineren Maßstabes sowie
- Fig. 5 und 6: ein weiteres Ausführungsbeispiel einer erfindungsgemäßen Schmiedemaschine im Axialschnitt nach der Linie V-V der Fig. 6 bzw. im Querschnitt nach der Linie VI-VI der Fig. 5 kleineren Maßstabes.

Eine Schmiedemaschine 1 besteht aus einem Maschinengestell 2, in dem um eine Schmiedeachse A ein ringförmiger Schmiedekasten 3 dreh- und antreibbar lagert, wobei der Schmiedekasten 3 über einen lediglich mit einem Antriebsrad 4 angedeuteten Antrieb in Drehung versetzt werden kann. Der Schmiedekasten 3 weist radiale Ausnehmungen 5 für gegeneinander wirkende und bei gleichzeitiger Schmiedekastendrehung hubbewegbare Schmiedestempel 6 auf, die werkstückseitig mit einem Schmiedewerkzeug 7 bestückt und an der werkstückabgewandten Seite mit einem Exzenterantrieb 8 als Hubantrieb ausgestattet sind. Der Exzenterantrieb 8 umfaßt den Schmiedestempeln 6 zugeordnete, in Ringwänden 9 des Schmiedekastens 3 gelagerte Exzenterwellen 10 mit Exzentern 11, und die Schmiedestempel 6 bilden am exzenterzugewandten Ende einen Pleuelkopf 12, der eine Aufnahme zum drehfesten Einsatz eines drehbar am Exzenter 11 sitzenden Lagerkörpers 13 aufweist. Die Schmiedestempel 6 werden in Schwenklagern 14 hub- und schwenkbewegbar geführt, so daß bei Exzenterdrehung den Schmiedestempeln 6 und damit den Schmiedewerkzeugen 7 eine Hubbewegung radial zur Schmiedeachse A und gleichzeitig eine Schwenkbewegung mit einer in einer Querebene zur Schmiedeachse A liegenden Bewegungsrichtung aufgezwungen werden.

Zum Antrieb der Exzenterwellen 10 ist ein Umlaufgetriebe 15 aus einem am Außenumfang des Schmiedekastens 3 drehbar und beispielsweise über eine Riemenscheibe 16 antreibbar gelagerten Zentralrad 17 und jeweils den Exzenterwellen 10 zugeordneten Umlaufrädern 18 vorgesehen.

Jeder Schmiedestempel 6 ist mit einer Hublagenverstelleinrichtung 19 ausgestattet, die aus einer von Gleitflächen 20 der Aufnahme des Pleuelkopfes 12 gebildeten, zu der durch die Exzenterwellenachse E und der Pleuelachse P bestimmten Axialebene normalen und zur Exzenterwellenachse E schräggerichteten Gleitbahn G und dem entsprechende Schrägflächen 21 bildenden Lagerkörper 13 besteht. Der Lagerkörper 13 sitzt dabei verschiebefest am Exzenter 11 und ist über die Exzenterwelle 10 und einen an der Exzenterwelle 10 angreifenden Verstellantrieb 22 schiebeverstellbar angeordnet, so daß es durch die Betätigung des Verstellantriebes zu einer Relativbewegung zwischen Lagerkörper 13 und Gleitbahn G des sich über Führungsanschläge 23 bewegungsfest in Exzenterwellenachsrichtung abstützenden Pleuels 6 kommt. Diese Relativbewegung bewirkt im Sinne eines Keilgetriebes eine Lageveränderung der Schmiedepleuel 6 in Richtung der Pleuelachse P, was die gewünschte Hublagenverstellung mit sich bringt.

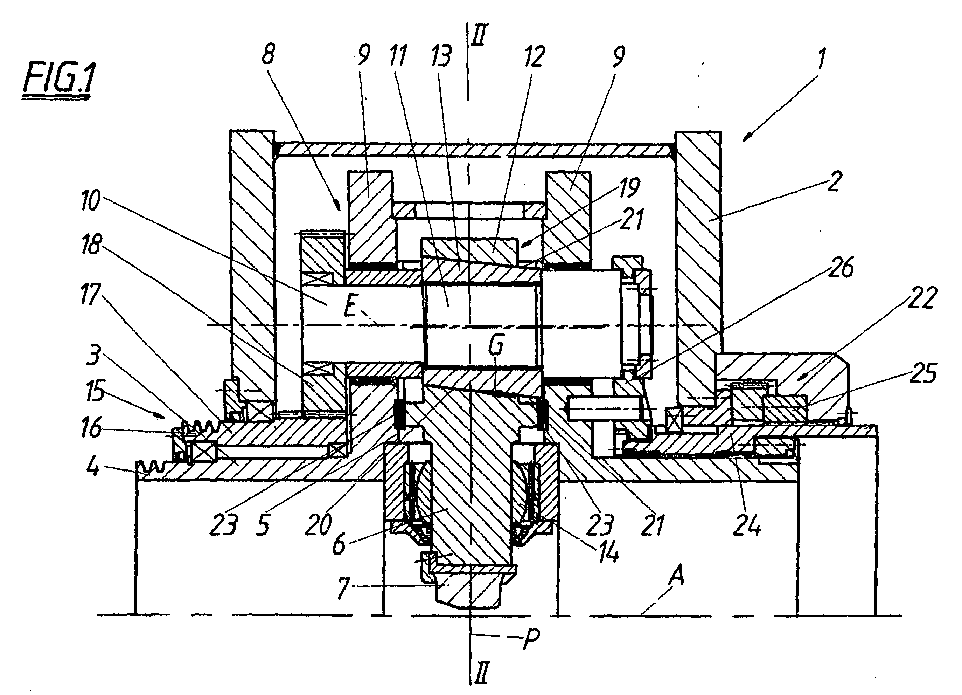

Gemäß den Ausführungsbeispielen nach Fig. 1 und 2 bzw. Fig. 3 und 4 umfaßt der Verstellantrieb 22 einen Schraubentrieb aus einer am Schmiedekasten 3 koaxial zur Schmiedeachse A drehfest, aber verschiebbar gelagerten Stellmutter 24 und einen mit der Stellmutter 24 kämmenden antreibbaren Zahnkranz 25, wobei die Stellmutter 24 Mitnehmer 26 aufweist, die verdrehbar, aber verschiebefest am den Umlaufrädern 18 abgewandten Ende der Exzenterwellen 10 angreifen. Durch eine Verdrehung des Zahnkranzes 25 ergibt sich somit eine Verschiebebewegung der Stellmutter 24 und damit eine axiale Schiebeverstellung der Exzenterwellen 10, so daß sich eine Hublagenverstellung sowohl bei stillstehender als auch bei arbeitender Maschine erreichen läßt.

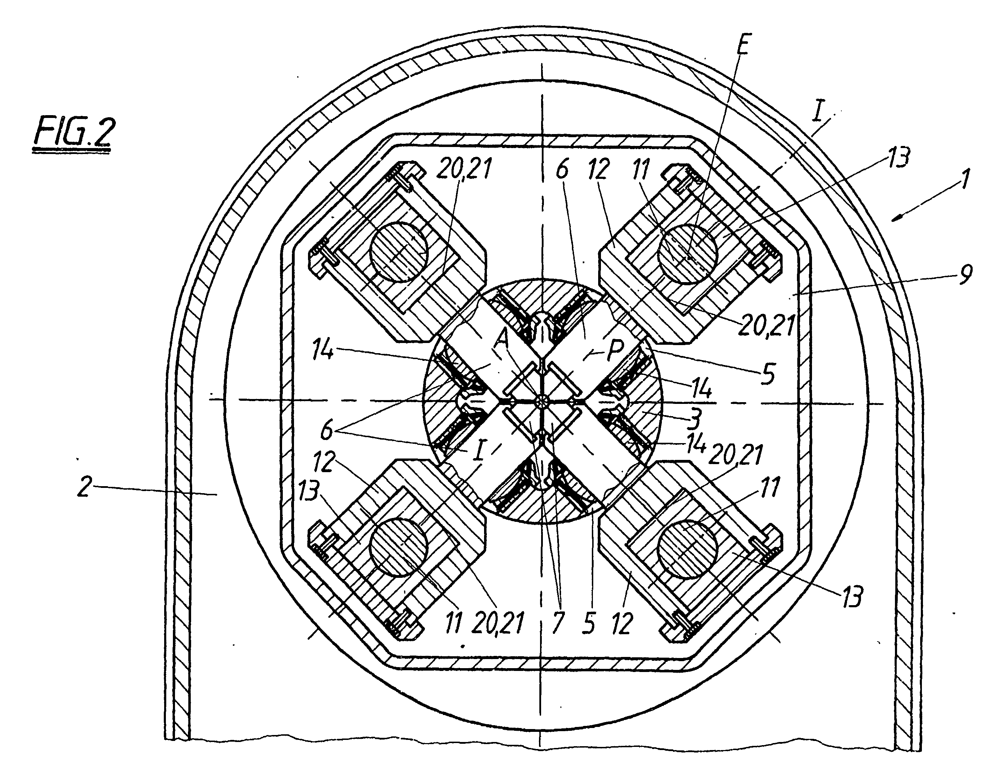

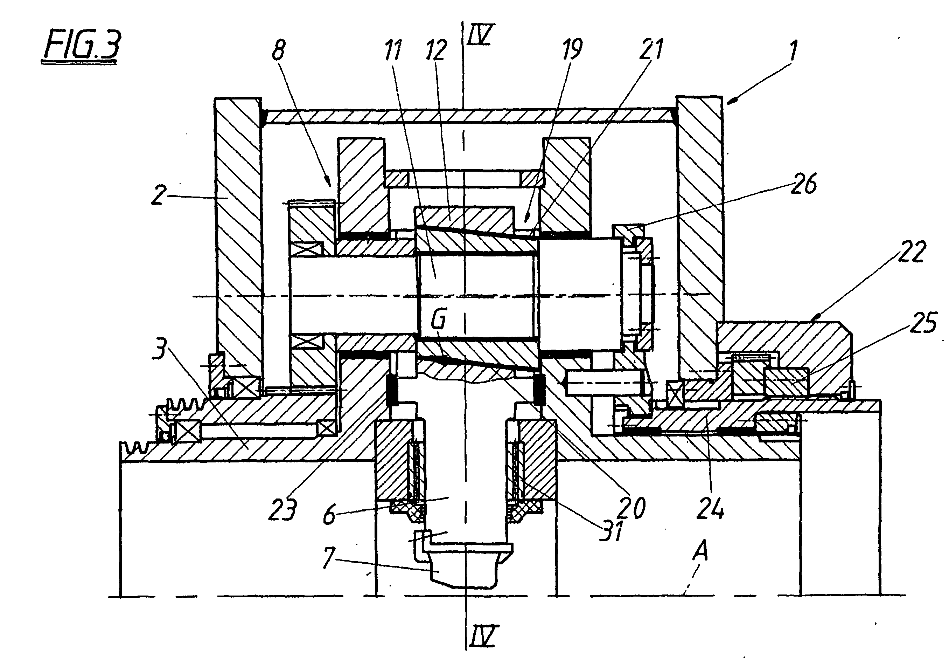

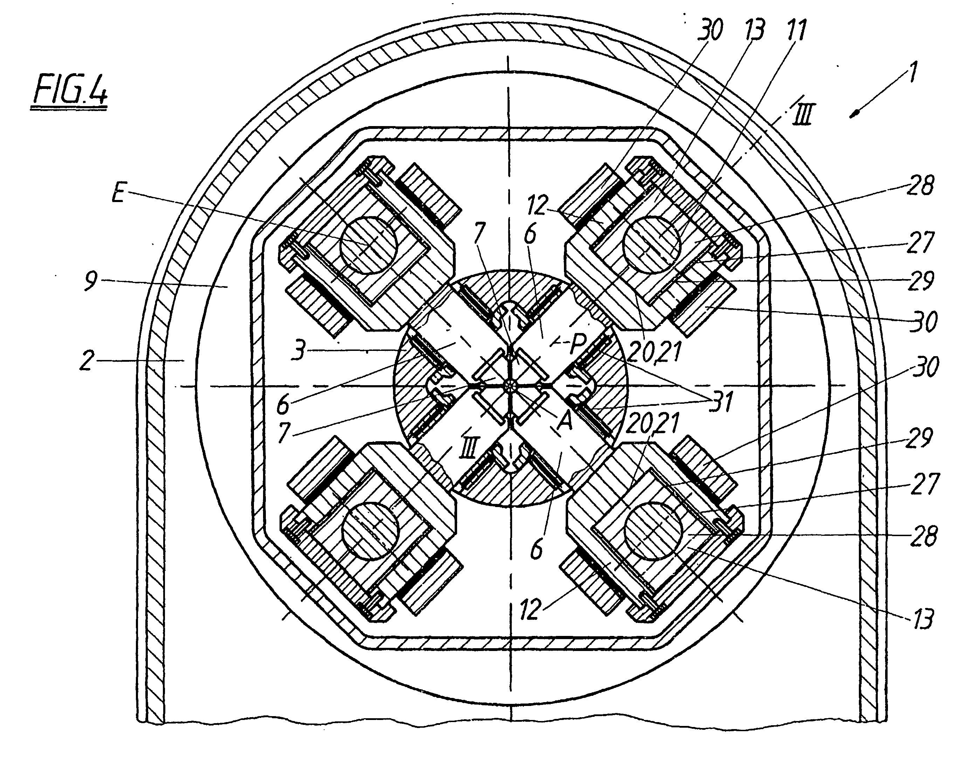

Fig. 3 und 4 veranschaulichen eine etwas abgeänderte Schmiedemaschine 1, wobei gleichbleibende Teile auch mit gleichen Bezugszeichen versehen sind. Zum Unterschied vom Ausführungsbeispiel nach Fig. 1 und 2, bei dem die Schmiedepleuel pleuelartig an den Exzentern angelenkt sind, gibt es beim Ausführungsbeispiel nach Fig. 3 und 4 zwischen den Exzentern 11 und dem Pleuelkopf 12 der Schmiedepleuel 6 eine Antriebsverbindung in Form einer Kreuzschleife, indem der Pleuelkopf 12 als Aufnahme für den Lagerkörper 13 eine Kulissenführung 27 bildet, in die der Lagerkörper 13 als Gleitstein 28 mit Querbewegungsspiel 29 eingesetzt ist. Dadurch wird die Exzenterbewegung in eine reine Hubbewegung umgewandelt, wobei Geradführungen 30, 31 für die Längsführung der Schmiedepleuel 6 im Schmiedekasten 3 sorgen. Auch hier ist aber zur Hublagenverstellung eine Hublagenverstelleinrichtung 19 mit einer aus den Gleitflächen 20 des Pleuelkopfes gebildeten, entsprechend schräg ausgerichteten Gleitbahn G und dieser zugeordneten Schrägflächen 21 des Lagerkörpers 13 vorgesehen, welche Lagerkörper 13 über den Verstellantrieb 22 zusammen mit den Exzenterwellen 10 relativ zu den Schmiedepleueln 6 in Exzenterwellenachsrichtung schiebeverstellbar sind, so daß wiederum unabhängig von der Drehung des Maschinenkastens und/oder der Exzenterwellen die Hublage der Pleuel 6 und damit der Schmiedewerkzeuge 7 wunschgemäß verstellt werden kann.

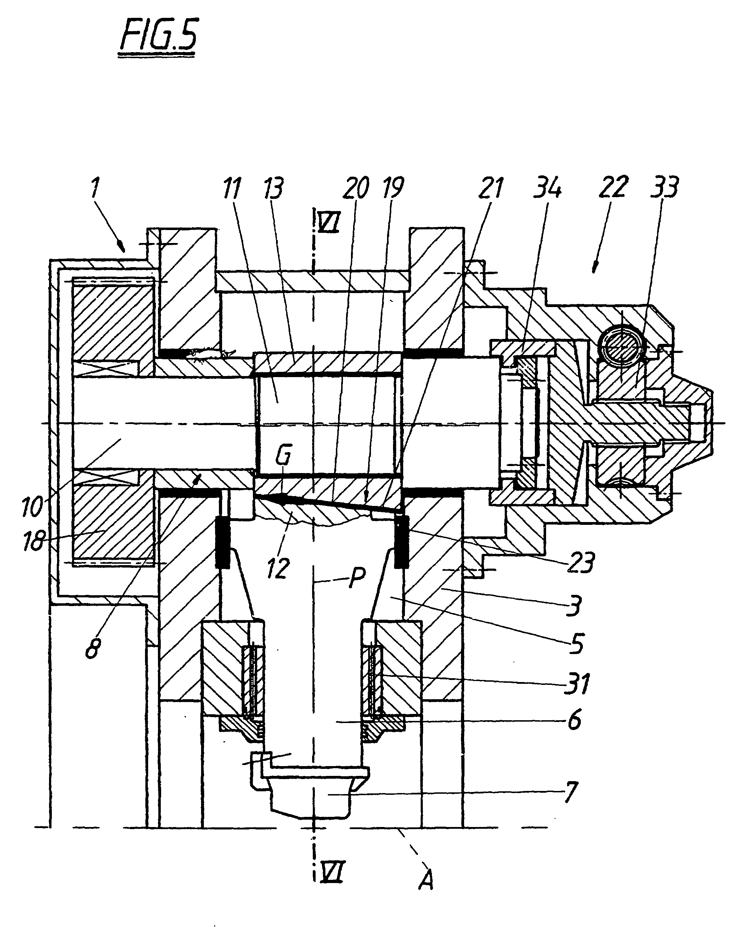

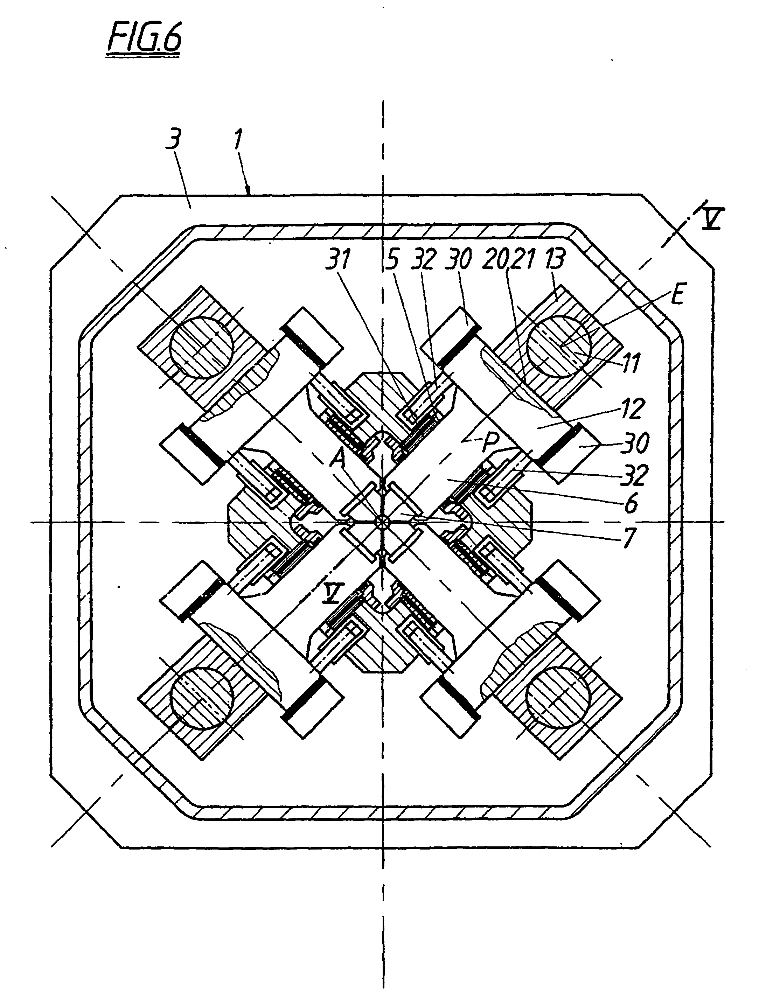

Beim Ausführungsbeispiel nach Fig. 5 und 6 handelt es sich um eine weitere ähnliche Schmiedemaschine 1, wobei gleichbleibende Teile wiederum mit gleichen Bezugszeichen versehen sind. Der Schmiedekasten 3 ist hier stillstehend angeordnet, und zwischen Pleuelkopf 12 und dem gleitsteinähnlichen Lagerkörper 13 gibt es lediglich eine kraftschlüssige Verbindung, wozu die in Geradführungen 30, 31 sitzenden Schmiedepleuel 6 über Druckfedern 32 gegen die Lagerkörper 13 druckbeaufschlagt und die Gleitflächen 20 gegen die Schrägflächen 21 gedrückt werden, so daß die Exzenterdrehung über das Zusammenspiel von Lagerkörper 13 und Pleuelkopf 12 die Hubbewegung der Schmiedepleuel bewirkt. Die Hublagenverstellung erfolgt aber ebenfalls mittels einer Hublagenverstelleinrichtung 19, die eine von der Gleitfläche 20 der Pleuelköpfe gebildete schräggerichtete Gleitbahn G und die zugehörende Schrägfläche 21 der Lagerkörper 13 umfaßt. Zur Schiebeverstellung der Lagerkörper 13 gibt es allerdings den Exzenterwellen 10 jeweils zugeordnete einzelne Verstellantriebe 22, die über einen Schraubentrieb 33 und drehbar, aber axial unverschiebbar an den Exzenterwellenenden angreifende Mitnehmer 34 die Exzenterwellen 10 axial verschieben und damit die Hublage der Schmiedestempel 6 im erforderlichen Sinne verändern.

## Patentansprüche

1. Schmiedemaschine (1) mit exzentergetriebenen Schmiedepleueln (6), die radial zur Exzenterwellenachse (E) in einem Schmiedekasten (3) hubbewegbar geführt sind und zur Antriebsverbindung am exzenterzugewandten Ende einen Pleuelkopf (12) mit einer Gleitfläche zum drehfest gleitenden Zusammenwirken mit einem drehbar am Exzenter (11) sitzenden Lagerkörper (13) aufweisen, **dadurch gekennzeichnet, daß** die Gleitfläche (2o) des Pleuelkopfes (12) eine zu der durch die Exzenterwellenachse (E) und die Pleuelachse (P) bestimmten Axialebene normale und zur Exzenterwellenachse (E) schräggerichtete Gleitbahn (G) bildet und der eine entsprechende Schrägfläche (21) bildende Lagerkörper (13) über einen Verstellantrieb (22) relativ zum in Exzenterwellenachsrichtung bewegungsfest abgestützten Pleuel (6) schiebeverstellbar angeordnet ist.

2. Schmiedemaschine nach Anspruch 1, **dadurch gekennzeichnet, daß** der Lagerkörper (13) verschiebefest am Exzenter (11) sitzt und der Verstellantrieb (22) an der axial verschiebbar gelagerten Exzenterwelle (10) angreift.

3. Schmiedemaschine nach Anspruch 1 oder 2, **dadurch gekennzeichnet, daß** der Lagerkörper (13) in Art eines Gleitsteines (28) mit Querbewegungsspiel (29) in der eine Kulissenführung (27) bildenden Aufnahme des Pleuelkopfes (12) eingesetzt ist.

4. Schmiedemaschine nach einem der Ansprüche 1 bis 3, **dadurch gekennzeichnet, daß** der Schmiedekasten (3) um eine zu den Exzenterwellenachsen (E) parallele Schmiedeachse (A) dreh- und antreibbar in einem Maschinengestell (2) lagert.

5. Schmiedemaschine nach Anspruch 4, **dadurch gekennzeichnet, daß** für alle Exzenterwellen (10) ein gemeinsamer Verstellantrieb (22) vorgesehen ist, der einen Schraubentrieb aus einer am Schmiedekasten (3) koaxial zur Schmiedeachse (A) drehfest, aber verschiebbar gelagerten Stellmutter (24) und einem mit der Stellmutter (24) kämmenden antreibbaren Zahnkranz (25) umfaßt, wobei die Stellmutter (24) an den Exzenterwellen (10) verdrehbar, aber verschiebefest angreifende Mitnehmer (26) aufweist.

## Claims

1. A forging machine (1) with eccentric-driven forging connecting rods (6) which are guided for reciprocating movement in a forging box (3) radially in relation to the eccentric shaft axis (E) and for the purpose of the driving connection have at the eccentric-facing end a connecting rod head (12) with a sliding surface for non-rotatably sliding cooperation with a bearing member (13) mounted rotatably on the eccentric (11), **characterised in that** the sliding surface (20) of the connecting rod head (12) forms a slideway (G) normal to the axial plane defined by the eccentric shaft axis (E) and the connecting rod axis (P), said slideway (G) being inclined at an angle to the eccentric shaft axis (E), and the bearing member (13) which forms a corresponding inclined surface (21) is disposed to be slidably movable via an adjusting drive (22) relatively to the connecting rod (6) which is supported so as to be immovable in the eccentric shaft axis direction.

2. A forging machine according to claim 1, **characterised in that** the bearing member (13) is mounted to be non-slidable on the eccentric (11) and the adjusting drive (22) engages the eccentric shaft (10), which is mounted to be axially slidable.

3. A forging machine according to claim 1 or 2, **characterised in that** the bearing member (13) is inserted in the form of a sliding block (28) with transverse movement clearance (29) in the holder of the connecting rod (12), such holder forming a slotted guide (27).

4. A forging machine according to any one of claims 1 to 3, **characterised in that** the forging box (3) is mounted in a machine frame (2) so as to be drivable and rotatable about a forging axis (A) parallel to the eccentric shaft axes (E).

5. A forging machine according to claim 4, **characterised in that** a common adjusting drive (22) is provided for all the eccentric shafts (10) and comprises a screw drive consisting of an adjusting nut (24) mounted on the forging box (3) coaxially of the forging axis (A) so as to be non-rotatable but slidable, and a drivable toothed ring (25) meshing with the adjusting nut (24), the latter comprising drivers (26) engaging the eccentric shafts (10) rotatably but non-slidably.

## Revendications

1. Machine à forger (1), comprenant des bielles de forgeage (6) entraînées par excentrique, guidées en étant susceptibles d'être déplacées sur la valeur d'une course, radialement par rapport à un axe d'arbre excentrique E, dans un boîtier de forgeage (3) et présentant, pour la liaison d'entraînement, sur l'extrémité tournée vers l'excentrique, une tête de bielle (12), munie d'une face de glissement, pour obtenir une coopération, avec glissement et assujettie en rotation, avec un corps de palier (13) monté à rotation sur l'excentrique (11), **caractérisée en ce que** la face de glissement (20) de la tête de bielle (12) forme une piste de glissement (G), perpendiculaire au plan axial déterminé par l'axe d'arbre d'excentrique (E) et l'axe de bielle (P) et orienté obliquement par rapport à l'axe d'arbre excentrique (E), et le corps de palier (13), formant une face oblique (21) correspondante, est disposé, avec une possibilité de réglage en coulissement, par l'intermédiaire d'un entraînement de réglage (22), par rapport à une bielle (6) soutenue et immobilisée dans la direction axiale de l'arbre d'excentrique.

2. Machine à forger selon la revendication 1, **caractérisée en ce que** le corps de palier (13) est monté de façon immobilisée rigidement sur l'excentrique (11) et l'entraînement de réglage (22) agit sur l'arbre d'excentrique (10) monté de façon déplaçable axialement.

3. Machine à forger selon la revendication 1 ou 2, **caractérisée en ce que** le corps de palier (13) est inséré dans un genre de patin coulissant (28), ayant un jeu de déplacement transversal (29), dans le logement, formant un guidage à coulisse (27), de la tête de bielle (12).

4. Machine à forger selon l'une des revendications 1 à 3, **caractérisée en ce que** le boîtier de forgeage (3) est monté dans un bâti de machine (2), de façon à pouvoir tourner autour d'un axe de forgeage (A), parallèle aux axes d'arbre d'excentrique (E), et de façon à pouvoir être entraîné.

5. Machine à forger selon revendication 4, **caractérisée en ce que**, pour tous les arbres d'excentrique (10), est prévu un entraînement de réglage (22) commun, comprenant une transmission à vis formée d'un écrou de réglage (24), monté de façon assujettie en rotation sur le boîtier de forgeage (3), coaxialement par rapport à l'axe de forgeage (A), mais en étant susceptible de coulisser et une couronne dentée (25), pouvant être entraînée en s'engrenant avec l'écrou de réglage (24), l'écrou de réglage (24) présentant des organes d'entraînement (26), susceptibles de tourner sur les axes d'excentrique (10) mais immobilisés en coulissement.
